# EUROPEAN PATENT SPECIFICATION

(11) **EP 1 993 244 B1**
(45) Date of publication and mention of the grant of the patent: **15.08.2012**
(21) Application number: 07720498.0
(22) Date of filing: 21.03.2007
(51) Int. Cl.: H04L 12/58, H04L 29/08

(54) **SYSTEM, APPARATUS AND METHOD FOR PROCESSING E-MAIL BY MEANS OF DATA SYNCHRONIZATION**
SYSTEM, VORRICHTUNG UND VERFAHREN ZUR E-MAIL VERARBEITUNG MITTELS SYNCHRONISATION
SYSTÈME, APPAREIL ET PROCÉDÉ DE TRAITEMENT DE COURRIER ÉLECTRONIQUE AU MOYEN D'UNE SYNCHRONISATION DE DONNÉES

(30) Priority: 23.03.2006 CN 200610065398
(43) Date of publication of application: 19.11.2008
(73) Proprietor: Huawei Technologies Co., Ltd., Longgang District, Shenzhen Guangdong 518129 (CN)
(72) Inventor: TIAN, Linyi, Shenzhen Guangdong 518129 (CN); KANG, Jiao, Shenzhen Guangdong 518129 (CN); CHENG, Jianzhang, Shenzhen Guangdong 518129 (CN); GUO, Xiangzhou, Shenzhen Guangdong 518129 (CN)
(74) Representative: Thun, Clemens
(86) International application number: PCT/CN2007/000924
(87) International publication number: WO 2007/107120

(56) References cited:
- EP-A- 1 533 717
- EP-A2- 1 014 629
- WO-A-03/042863
- WO-A-03/083667
- CN-C- 1 103 525
- US-A1- 2007 028 004
- SYNCML CONSORTIUM: "SyncML Sync Protocol, version 1.0" INTERNET CITATION, [Online] XP002217356 Retrieved from the Internet: URL:www.syncml.org/docs/syncml_protocol_v1 0_20001207.pdf> [retrieved on 2002-10-18]

## Description

### FIELD OF THE INVENTION

The present invention relates to the data synchronization technology in a communication system, and in particular, to a method, an apparatus, and a system for processing emails through data synchronization.

### BACKGROUND

The email service is prevalent on the Internet. Through an email system on the Internet, a user can contact other users quickly at a low cost. Emails may carry attachments in the form of texts, images, audio, news, topics, and so on.

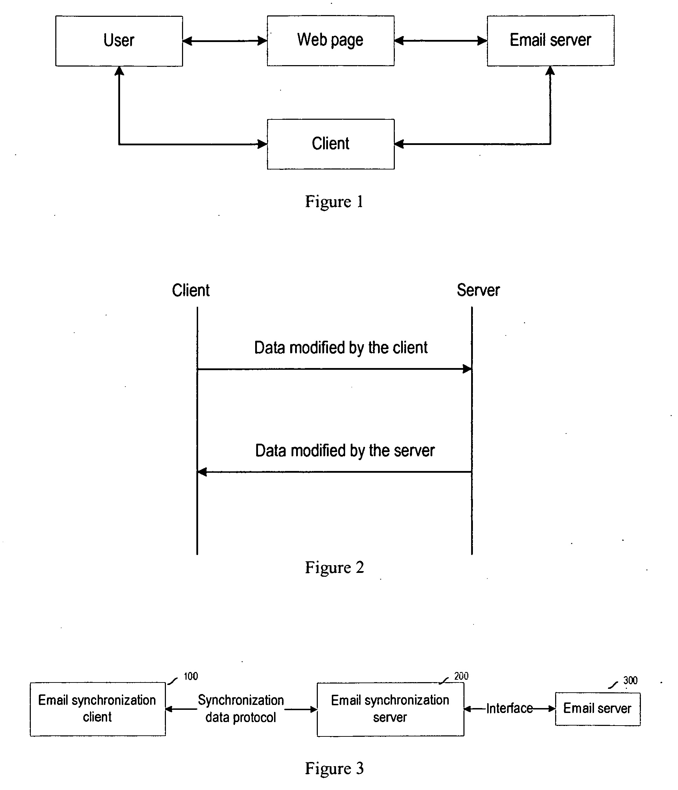

As shown in Figure 1, a user may access an email in two ways: (1) The user logs in to his mailbox on a website, browses the email titles provided by the email server, and downloads the desired email from the email server through the Hyper Text Transfer Protocol (HTTP); (2) through the Post Office Protocol (POP3) or the Internet Message Access Protocol (IMAP4), the user downloads emails from the email server to a client, and reads the emails offline on the client.

Such ways of accessing emails may be applied to a fixed communication system or a wireless communication system, but both ways of accessing emails have this drawback: The user is unable to detect the status of his emails in real time. After receiving an email, the email server is unable to notify the user to receive the email in time. The user cannot obtain the email unless he/she accesses the email server in either of the foregoing two ways. Further, when the way of accessing an email is applied to a wireless communication system, the technologies based on the Transfer Control Protocol/Internet Protocol (TCP/IP) or the User Datagram Protocol (UDP) are hardly practicable on a mobile client, and the bandwidth of a wireless communication system can hardly support reliable and stable operation of these protocols.

A Synchronization Markup Language, SyncML, was created in February 2000 in order to implement data synchronization of personal information and enterprise information between platforms and networks. The SyncML aims to synergize the user, equipment developer, infrastructure developer, data provider, application software developer and the service provider (SP), and enable any client to access any network data anytime anywhere.

A typical application of the SyncML is data synchronization between mobile equipment and network service equipment. Moreover, the SyncML is also used for data synchronization between two peer devices, for example, two computers. Figure 2 shows data synchronization between a client and a server in the prior art. After performing equipment capability information negotiation at the synchronization initialization stage, the client sends the data modified on the client as synchronization data to the server for storing, and the server sends the data modified on the server as synchronization data to the client for storing, thus ensuring synchronization of data between the client and the server.

WO 03/042863 A discloses that a method of synchronization, includes: the Sync client agent sends the server synchronization agent SA a SyncML message (client modifications), which contains at least the data being the object of the synchronization in the client device and having changed after the preceding synchronization; the synchronization block SE of the server analyses the differences and uniforms the data sets; after this, the SA returns the modifications made in the server to the client agent. (page 5, lines 25 ~ 32)

WO 03/083667 A discloses a synchronization process, wherein a email database 102 is fully synchronized with a wireless data processing device 130. Thus, any actions performed on the wireless device 130 are automatically updated on the email database 102 and any transactions occurring at the email database 102 automatically reflected on the device 130.

EP 1533717 Al, discloses a method to provide sync notifications to a client device, which includes: when an event of interest occurs for the mobile device, the server decides whether or not the device needs to be prompted to sync. A parameter that indicates whether an event of interest renders the device no longer up to date from the perspective of the server or whether an event of interest occurs and the device has not contacted the server for a certain period time is compared to a last known parameter for a device. If the parameters match and the current time is greater than a time out value, a sync notification is sent. If the parameters don't match, the sync notification is sent.

### SUMMARY

Embodiments of the present invention provide an email synchronization server for processing emails through data synchronization. The email synchronization server detects the status of a user's emails, and notifies the user of receiving the email in time through an email synchronization client.

Further, the embodiments of the present invention provide an email synchronization client for processing emails through data synchronization. The email synchronization client captures the status of the email detected by the email synchronization server, and notifies the user of receiving the email in time.

Further, the embodiments of the present invention provide a method for processing emails through data synchronization. The method detects the status of emails of a user, and notifies the user of receiving the email in time through an email synchronization client.

The technical solution according to the embodiments of the present invention is described hereinafter:

The embodiments also provide an email synchronization server, which includes an email management module, a command resolution/generation module, and a data synchronization module, wherein the command resolution/generation module connects the email management module to the data synchronization module, the data synchronization module, adapted to transmit email data in a synchronous data format with an email synchronization client, and exchange email data with the command resolution/generation module; the command resolution/generation module, adapted to convert email data in a non-synchronous data format sent from the email management module into the synchronous data format, and/or adapted to resolve email data in the synchronous data format sent from the data synchronization module into the non-synchronous data format; the email management module, adapted to exchange email data in the non-synchronous data format with the command resolution/generation module, and to exchange the email data in the non-synchronous data format with an email server.

The embodiments further provides a method for processing emails through data synchronization, including:
transmitting, by an email synchronization server, email data in a synchronous data format with an email synchronization client
and at least one of the following two steps: ① converting, by the email synchronization server, email data in a non-synchronous data format into the synchronous
data format, and ② resolving, by the email synchronization server, email data in the synchronous data format into the non-synchronous data format;
exchanging, by the email synchronization server, email data in the non-synchronous data format with an email server.

According to the embodiments of the present invention, a data synchronization module and an email management module are set in the email synchronization client to enable the email synchronization client capable of receiving and sending emails. Further, an email synchronization server is set between the email synchronization client and an email server. The email synchronization server includes an email management module and a data synchronization module. Therefore, the email synchronization server detects the emails received by the email server according to preset rules, sends emails or email notifications to the synchronization client through a data synchronization process, and ensures that the email synchronization client is able to detect the user's email status and notify the user of receiving emails in time through the email synchronization client.

### BRIEF DESCRIPTION OF THE DRAWINGS

Figure 1 shows how a user obtains an email in the prior art.

Figure 2 shows data synchronization between the client and the server in the prior art.

Figure 3 shows a system for processing emails through data synchronization according an embodiment of the present invention.

Figure 4 shows a system for processing emails through data synchronization according an embodiment of the present invention.

Figure 5 is a flowchart of a method for sending emails through data synchronization according an embodiment of the present invention.

Figure 6 is a flowchart of a method for receiving emails through data synchronization according an embodiment of the present invention.

Figure 7 is a flowchart of a method for sending email notifications through data synchronization according an embodiment of the present invention.

Figure 8 is a flowchart of a method for synchronizing email status through data synchronization according an embodiment of the present invention.

Figure 9 is a flowchart of a method for forwarding downloaded emails through data synchronization according an embodiment of the present invention.

Figure 10 shows the structure of an account registered by a user on the email synchronization client according an embodiment of the invention.

Figure 11 shows the structure of an account registered by a user on the email synchronization server according an embodiment of the invention.

Figure 12 is a flowchart of a method for registering an account through data synchronization according an embodiment of the present invention.

Figure 13 is a flowchart of a method for logging in to an account through data synchronization according an embodiment of the present invention.

Figure 14 shows the structure of an exemplary account registered on the email synchronization client according an embodiment of the invention.

### DETAILED DESCRIPTION

This present invention is described in details hereinafter given with reference to accompanying drawings and embodiments in order to clarify objects, advantages and technical solution of the present invention.

The embodiments of the present invention realize processing email through data synchronization. When a client receives or sends an email in the communication system, a data synchronization module and an email management module can be set in the client to form an email synchronization client capable of receiving and sending emails. Accordingly, an email synchronization server consisting of an email management module and a data synchronization module can be configured between the email synchronization client and the email server.

The email management modules in the email synchronization client and in the email synchronization server are adapted to process email-related functions; and the data synchronization modules in the email synchronization client and in the email synchronization server are adapted to synchronize and transmit emails. In this way, after receiving an email, the email server can send the email to the email synchronization server. According to the data synchronization process, the email synchronization server sends the email or an email notification as synchronous data to the email synchronization client, which enables the email synchronization client to detect the user's email status, and enables the user to receive the email or email notification in time through the email synchronization client.

According to the embodiments of the present invention, the email synchronization client and the email synchronization server can be applied to a wireless communication system or a fixed communication system.

Figure 3 shows a system for processing emails through data synchronization according to the embodiments of the present invention. The system includes an email synchronization client 100, an email synchronization server 200, and an email server 300.
The email server 300, a server connected with the email synchronization server 200 and providing email in current communications system, is adapted to send an email or email status to the email synchronization server 200, or send out the email received from the email synchronization server, or update the status after receiving an email status;
The email synchronization server 200, connected with the email synchronization client 100 and the email server 300, is adapted to receive an email or email status sent by the email server 300 and synchronize it to the email synchronization client 100, or send an email notification to the email synchronization client 100 so that the email synchronization client can obtain the email; or is adapted to receive an email from the email synchronization client 100 and forward it to the email server 300 for sending it out, or receive an email status from the email synchronization client 100 and forward it to the email server 300 for updating.
The email synchronization client 100, connected with the email synchronization server, is adapted to send an email or email status to the email synchronization server 200; or synchronously receive emails from the email synchronization server 200, or obtain emails from the email synchronization server 200 after receiving an email notification.

According to the embodiments of the present invention, the email synchronization server may also send an email acquisition request or an email status query request to the email server; after receiving such a request from the email synchronization server, the email server sends an email or email status to the email synchronization server as requested. An email acquisition request or an email status request may be sent by the email synchronization side to the email synchronization server, or sent by the email synchronization server to the email server according to the monitoring requirement.

According to the embodiments of the present invention, the email synchronization client 100 interacts with the email synchronization server 200 through a data synchronization protocol. The email synchronization server 200 interacts with the email server 300 through an interface. Such an interface may be a web service customized by the operator, or Light Directory Access Protocol (LDAP), or a TCP/IP-based internal interface, or an interface compliant with the existing email protocol.

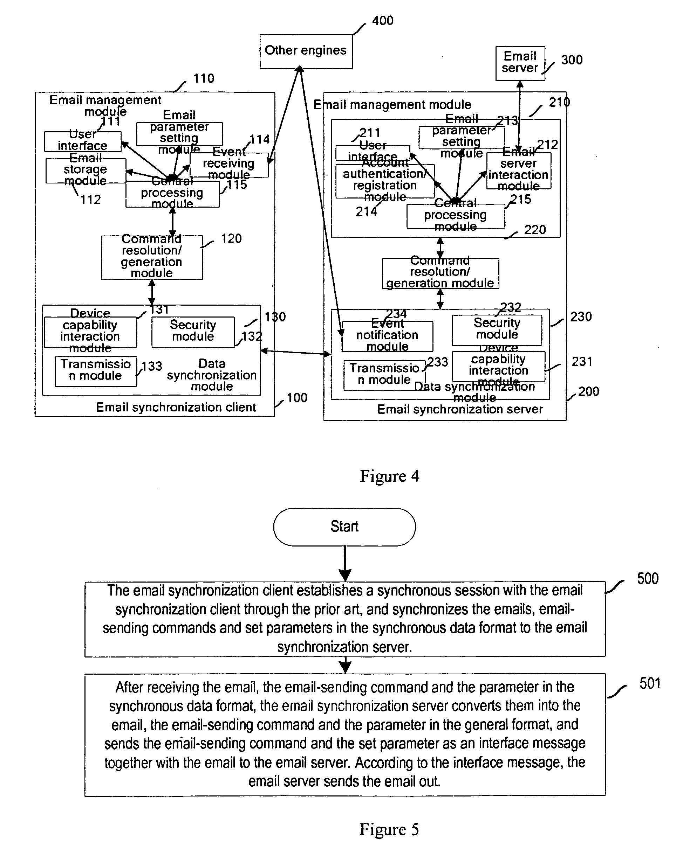

According to the embodiments of the present invention, the email synchronization client 100 and the email synchronization server 200 respectively include an email management module, a command resolution/generation module, and a data synchronization module. Figure 4 shows a system for processing emails through data synchronization.

The email synchronization server 200 includes an email management module 210 connected with the email server 300. The email management module 210 is further connected with a command resolution/generation module 220 in the email synchronization server 200. The command resolution/generation module 220 is further connected with a data synchronization module 230 in the email synchronization server 200. The data synchronization module 230 is further connected with the email synchronization client 100, namely, connected with a data synchronization module 130 in the email synchronization client 100.

The email management module of the email synchronization server 200 is a core module in the email synchronization server 200, and is adapted to interact with the email server 300 through an interface to exchange email data, and monitor the emails or email status in the email server 300; and interact with the command resolution/generation module 220 to exchange email data.

The email management module 210 includes: a central processing module 215; and an email server interaction module 212, a user interface 211, an email parameter setting module 213, and an account authentication/registration module 214, which interact with the central processing module 215 respectively. Through the user interface 211, the user interacts with the email synchronization server 200 under the control of the central processing module 215. The email server interaction module 212 is connected with the email server 300, and interacts with the email server 300 under the control of the central processing module 215. The email parameter setting module 213 is adapted to set email parameters under the control of the central processing module 215 according to the email parameters sent by the user through the user interface. The account authentication/registration module 214 is adapted to save the user's account information under the control of the central processing module 215, and implement account authentication and authorization. The central processing module 215 is adapted to coordinate the work of the foregoing modules and interact with the command resolution/generation module 220.

The data synchronization module 230 interacts with the email synchronization client 100 through a data synchronization protocol to synchronously transmit emails, email status, and email notifications.

The data synchronization module 230 includes an event notification module 234, a security module 232, a device capability interaction module 231, and a transmission module 233. The event notification module 234 is adapted to send email notifications to the email synchronization client 100. The security module 232 is adapted to ensure secure transmission of email data between the email synchronization client 100 and the email synchronization server 200, for example, encryption technology such as the Message-Digest Algorithm 5 (MD5), Data Encryption Standard (DES), or Advanced Encryption Standard (AES) may be adopt to encrypt email data, or the Transport Layer Security (TLS) protocol may be adopt to encrypt synchronization transmission channel. or a third-party device such as firewall can be arranged between the email synchronization client 100 and the email synchronization server 200 to enhance security of email data transmission. The device capability interaction module 231 is adapted to enable device capability interaction and then device capability negotiation between the email synchronization server 200 and the email synchronization client 100, where device capabilities can refer to memory space currently utilized by the email synchronization client, free memory space, support of receiving or sending email titles only without downloading email attachments, and supported size and types of email attachments. The transmission module 233 is adapted to transmit emails or email status between the email synchronization server 200 and the email synchronization client 100. It may also adopt the real-time synchronization mechanism used in the data synchronization to transmit emails or email status in real time without participation of the user.

The command resolution/generation module 220 is adapted to connect the email management module 210 to the data synchronization module 230, and in particular, connect the central processing module 215 in the email management module 210 to the data synchronization module 230. The command resolution/generation module 220 converts the email data, commands, and/or parameters sent from the central processing module 215 into the synchronous data format, and sends them to the data synchronization module. Or, the command resolution/generation module 220 resolves the email data, commands, and/or parameters from the synchronous data format sent from the data synchronization module 230, and sends them to the central processing module 215.

The email synchronization client 100 includes a data synchronization module 130 connected with (the data synchronization module 230 in) the email synchronization server 200. The data synchronization module 130 is further connected with the command resolution/generation module 120 in the email synchronization client 100. The command resolution/generation module 120 is further connected with the email management module 110 in the email synchronization client 100.

The email management module 110 includes: a central processing module 115; and a user interface 111, an email storage module 112, an email parameter setting module 113, and an event receiving module 114 which interact with the central processing module 115 respectively. Through the user interface 111, the user interacts with the email synchronization client 100 under the control of the central processing module 115. The email storage module 112 is adapted to store email data and account information under the control of the central processing module 115. The email parameter setting module 113 is adapted to set email parameters under the control of the central processing module 215 according to the email parameters sent by the user through the user interface. The event receiving module 114 is adapted to receive email notifications from the email synchronization server 200. The central processing module 115 is adapted to coordinate the work of the foregoing modules and interact with the command resolution/generation module 120.

The functional modules in the data synchronization module 130 are similar to the functional modules in the data synchronization module 230 disposed in the email synchronization server 200, and therefore implement similar functions. The data synchronization module 130 includes a device capability module 131, a security module 132, and a transmission module 133, exclusive of an event notification module.

The command resolution/generation module 120 is adapted to connect the email management module 110 to the data synchronization module 130, and in particular, connect the central processing module 115 in the email management module 110 to the data synchronization module 130. The command resolution/generation module 120 converts the email data, commands, and/or parameters sent from the central processing module 115 into the synchronous data format, and sends them to the data synchronization module 130. Or, the command resolution/generation module 120 resolves the email data, commands, and/or parameters from the synchronous data format sent from the data synchronization module 130, and sends them to the central processing module 115.

Additionally, according to the embodiments of the present invention, an engine 400 enabling email notification can be arranged between the email synchronization client 100 and the email synchronization server 200, namely, between the event receiving module 114 and the event notification module 234. When the email synchronization server 200 receives an email while the email synchronization client 100 is disconnected with the email synchronization server 200, an email notification will be sent to the email synchronization client 100 through the engine 400. The engine 400 may be a Short Message Service Center (SMSC), a Multimedia Messaging Service Center (MMSC), or a Wireless Application Protocol (WAP) gateway.

Information interaction can be performed between the email synchronization server 200 and the engine 400 through a Short Message Point-to-Point protocol (SMPP), MM7, WAP PUSH, or OTA SIP. Information interaction can be performed between the engine 400 and the email synchronization client 100 through Short Message Service (SMS), Multimedia Messaging Service (MMS), WAP PUSH or Session Initiation Protocol (SIP) message.

In the practice, the email synchronization server 200 and the existing email server 300 may be set in one entity, or set separately and connected through an interface.

According to the embodiments of the present invention, the email synchronization client 100 may be a Mobile Station (MS), a computer, or a Personal Digital Assistant (PDA).

The embodiments of the present invention also provide a method for processing emails through data synchronization. In this method, a data synchronization module and an email management module are configured at the client in advance, and therefore an email synchronization client capable of receiving and sending emails is provided. Accordingly to this method, an email synchronization server consisting of an email management module and a data synchronization module can be set between the email synchronization client and the email server.

To enable interaction between the email management module and the data synchronization module in the email synchronization server or the email synchronization client, a command resolution/generation module of the email synchronization server and the email synchronization client respectively is provided. The command resolution/generation module is adapted to enable conversion between synchronous and non-synchronous data formats of email data and of commands and/or parameters. For example, the command resolution/generation module converts an email in the email management module into an email in a synchronous data format, such as a synchronous data format defined by the Open Mobile Alliance Data Synchronization (OMA DS) group.

After receiving email data from an email synchronization client or an email server, the email synchronization server processes the email data, and sends processed email data to the email server or the email synchronization client.

In order to realize transmission of email data and commands and/or parameters in the synchronous data format between an email synchronization server and an email synchronization client, the embodiments of the present invention extends the messages defined by the data synchronization protocol such that the messages can bear email data and commands and/or parameters.

The email data, commands, and/or parameters transmitted between the email synchronization server and the email synchronization client are described hereinafter in detail.

Figure 5 is a flowchart of a method for sending emails through data synchronization according to an embodiment of the present invention, including the following steps:

Step 500: The email synchronization client establishes a synchronous session with the email synchronization client, and synchronizes emails, email-sending commands, and parameters in the synchronous data format to the email synchronization server.

A data synchronization module is provided in both the email synchronization client and the email synchronization server. Therefore, synchronization can be established between them.

Emails are edited by the user according to the instructions received by the user interface module of the email synchronization client from the central processing module. Meanwhile, the central processing module reads the parameter set by the user through the user interface from the email parameter setting module of the email synchronization client, and then sends the email, the parameter, and the email-sending command to the command resolution/generation module of the email synchronization client. The command resolution/generation module converts the email, the parameter, and the email-sending command into a synchronous data format, and sends them to the data synchronization module of the email synchronization client. Through a data synchronization protocol, the data synchronization module sends the email, the parameter, and the email-sending command in the synchronous data format to the data synchronization module of the email synchronization server.

According to the embodiments of the present invention, the user can send not only emails, but also part of an email, such as an email title. To send an email title without an attachment, the user needs to set a parameter. The parameter carries an indication of the email-sending command, indicating to send the email title only, for example.

Step 501: The email synchronization server converts the received email, email-sending command, and parameter in the synchronous data format into an email, an email-sending command, and a parameter in the general format, and then sends the email-sending command and the parameter as an interface message together with the email to the email server. According to the interface message, the email server sends the email out.

The data synchronization module of the email synchronization server sends the received email, parameter, and email-sending command in the synchronous data format to the command resolution/generation module of the email synchronization server, where the received email, parameter, and email-sending command in the synchronous data format is further resolved into an email, a parameter, and an email-sending command in the general format. The resolved email, parameter, and email-sending command are sent to the central processing module of the email synchronization server. The central processing module reads the parameter set by the user through a user interface or pre-stored in the email parameter setting module of the email synchronization server; and sends the email, the parameters configured for the email synchronization client and the central processing module, and the email-sending command to the email server interaction module of the email synchronization server. The email server interaction module sends the email, the parameters configured for the email synchronization client and the email server interaction module, and the email-sending command as an interface message to the email server through an interface connected with the email server. The email server sends the email out through an SMTP message.

Likewise, a parameter, namely, an indication of an email-sending command, can also be set or pre-stored in the email synchronization server.

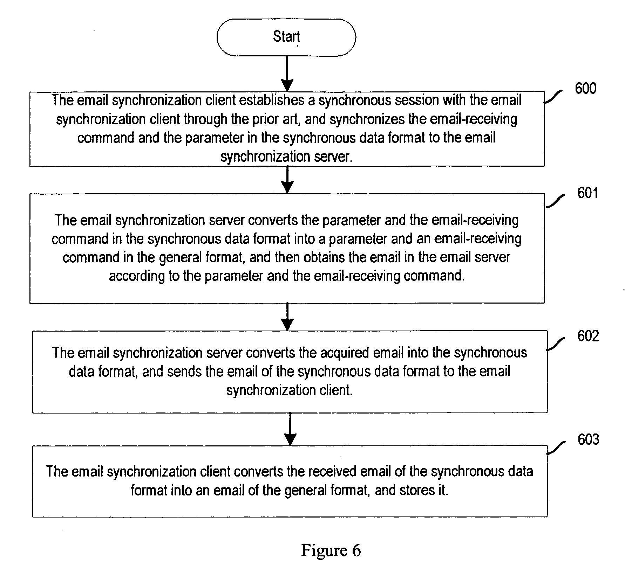

Figure 6 is a flowchart of a method for receiving emails through data synchronization according an embodiment of the present invention, including the following steps:

Step 600: The email synchronization client establishes a synchronous session with the email synchronization client, and synchronizes the email-receiving command and the parameter in the synchronous data format to the email synchronization server.

After receiving an instruction from the central processing module through a user interface of the email synchronization client, the user sends an email-receiving command. Meanwhile, the central processing module reads the parameters from the email parameter setting module of the email synchronization client, and then sends the email-receiving command and the parameter to the command resolution/generation module of the email synchronization client. The command resolution/generation module converts the email-receiving command and the parameter into a synchronous data format, and sends them to the data synchronization module of the email synchronization client. Through a data synchronization protocol, the data synchronization module sends the email-receiving command and the parameter in the synchronous data format to the data synchronization module of the email synchronization server.

This parameter is an indication message of the email command.

Step 601: The email synchronization server converts the parameter and the email-receiving command in the synchronous data format into a parameter and an email-receiving command in the general format, and then obtains the email in the email server according to the parameter and the email-receiving command.

After receiving the parameter and the email-receiving command in the synchronous data format, the data synchronization module of the email synchronization server sends them to the command resolution/generation module of the email synchronization server, where they are resolved into the parameter and the email-receiving command in the general format. The parameter and the email-receiving command after being resolved are sent to the central processing module of the email synchronization server. The central processing module reads the parameter in the email parameter setting module of the email synchronization server; and sends the email-receiving command and the parameters of the email synchronization client and the central processing module to the email server interaction module of the email synchronization server. By using the email-receiving command and the parameters of the email synchronization client and the email server interaction module, the email server interaction module interacts with the email server through an interface connected with the email server to obtain the email.

Step 602: The email synchronization server converts the acquired email into the synchronous data format, and sends the email in the synchronous data format to the email synchronization client.

After being received in the email server interaction module of the email synchronization server, the acquired email is sent to the central processing module of the email synchronization server. The central processing module sends the email to the command resolution/generation module of the email synchronization server. The command resolution/generation module converts the email into an email in the synchronous data format, and sends it to the data synchronization module of the email synchronization server. The data synchronization module sends the email in the synchronous data format to the data synchronization module of the email synchronization client.

Step 603: The email synchronization client converts the received email in the synchronous data format into an email in the general format, and then stores it.

The data synchronization module of the email synchronization client sends the email in the synchronous data format to the command resource/generation module of the email synchronization client. The command resolution/generation module resolves the email in the synchronous data format into an email in the general format, and sends the email to the central processing module of the email synchronization client. The central processing module stores the email into the email storage module of the email synchronization client, or displays the email to the user through a user interface.

In the method shown in Figure 5 or Figure 6, the email synchronization client establishes a synchronous session with the email synchronization server in any of these three ways: (1) To establish unidirectional synchronization from the email synchronization server to the email synchronization client to implement the function of receiving emails; (2) To establish unidirectional synchronization from the email synchronization client to the email synchronization server to implement the function of sending emails; and (3) To establish bidirectional synchronization between the email synchronization client and the email synchronization server to implement the function sending and/or receiving emails.

According to the embodiments of the present invention, the user interface of the email synchronization client may provide options for the user, namely, receiving, sending, or, receiving and sending. These options are respectively corresponding to the previous three ways of establishing a synchronous session.

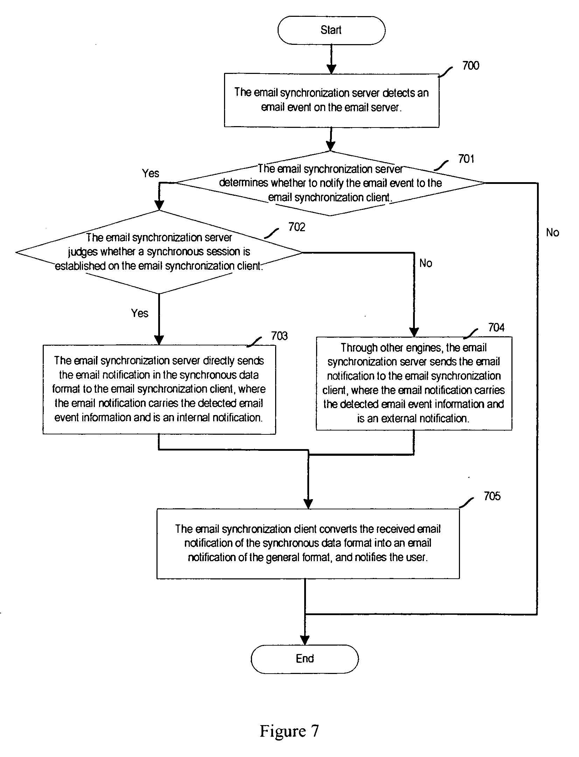

Figure 7 is a flowchart of a method for sending an email notification through data synchronization according an embodiment of the present invention, including the steps hereinafter.

Step 700: The email synchronization server detects an email event on the email server, for example, arrival, deletion, or status change of an email.

The email server interaction module of the email synchronization server monitors the email server, detects an email event, and notifies the central processing module of the email synchronization server.

Step 701: The email synchronization server determines whether it is necessary to notify the email synchronization client of the email event; and, if necessary, proceeds to step 702; or, if not necessary, finishes the process.

From the email parameter setting module of the email synchronization server, the central processing module of the email synchronization server obtains the parameter set by the user through a user interface or pre-stored in the module, and determines whether it is necessary to notify the email synchronization server of the email event according to the parameter.

Step 702: The email synchronization server judges whether a synchronous session is established with the email synchronization client; and, if yes, proceeds to step 703; or, if no, proceeds to step 704.

The judging step is implemented by the data synchronization module of the email synchronization server.

Step 703: The email synchronization server directly sends the email notification in the synchronous data format to the email synchronization client, where the email notification carries the detected email event information and is an internal notification. then proceed to step 705.

The central processing module of the email synchronization server attaches the email event into the email notification and sends the email notification to the command resolution/generation module of the email synchronization server. The command resolution/generation module converts the email notification into the synchronous data format, and sends it to the data synchronization module of the email synchronization server. The data synchronization module sends the email notification in the synchronous data format to the data synchronization module of the email synchronization client.

Step 704: Through an engine, the email synchronization server sends the email notification to the email synchronization client, where the email notification is an external notification and carries the detected email event information. then Proceed to step 705.

The central processing module of the email synchronization server attaches the email event into the email notification and sends the email notification to the command resolution/generation module of the email synchronization server. The command resolution/generation module sends the email notification to the event notification module in the data synchronization module of the email synchronization server. Through an engine, the event notification module sends the email notification to the event receiving module of the email synchronization client.

Step 705: The email synchronization client converts the received email notification in the synchronous data format into an email notification in the general format, and notifies the user.

When the email notification is an internal notification, the data synchronization module of the email synchronization client sends the email notification in the synchronous data format to the command resource/generation module of the email synchronization client. The command resolution/generation module converts the email notification in the synchronous data format into an email notification in the general format, and sends the email notification to the central processing module of the email synchronization client. The central processing module sends the email notification to the user through a user interface in the email management module of the email synchronization client.

When the email notification is an external notification, the event receiving module of the email synchronization client sends the email notification to the central processing module of the email synchronization client. The central processing module sends the email notification to the user through a user interface of the email synchronization client.

Moreover, according to the embodiments of the present invention, the status of emails can be synchronized through data synchronization. For example, if the user has read an email, the status of the email will be marked "Read"; if the user has answered an email, the status of the email will be marked "Answered". Through the data synchronization technology, the status of emails in the email synchronization client can be consistent with that of emails in the email server.

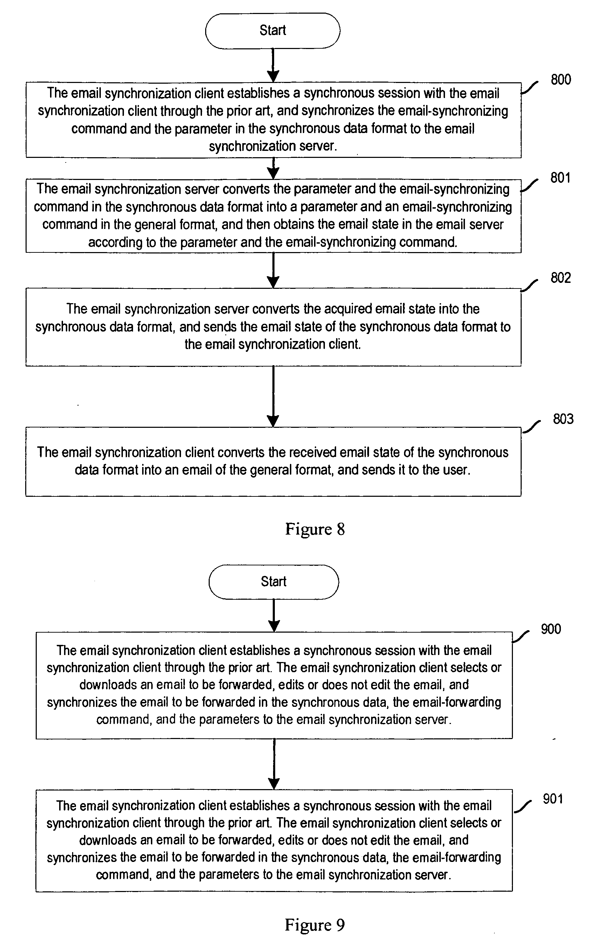

Figure 8 is a flowchart of a method for synchronizing email status through data synchronization according an embodiment of the present invention, including the steps hereinafter.

Step 800: The email synchronization client establishes a synchronous session with the email synchronization server, and synchronizes the email-synchronizing command and the parameter in the synchronous data format to the email synchronization server.

After receiving an instruction from the central processing module through a user interface of the email synchronization client, the user sends an email-synchronizing command. Meanwhile, the central processing module reads the parameters (which is pre-stored or set by the user through a user interface) from the email parameter setting module of the email synchronization client, and then sends the email-synchronizing command and the parameters to the command resolution/generation module of the email synchronization client. The command resolution/generation module converts the email-synchronizing command and the parameters into the synchronous data format, and sends them to the data synchronization module of the email synchronization client. Through a data synchronization protocol, the data synchronization module sends the email-synchronizing command and the parameters in the synchronous data format to the data synchronization module of the email synchronization server.

This parameter is an indication message of the email-synchronizing command.

Step 801: The email synchronization server converts the parameter and the email-synchronizing command in the synchronous data format into a parameter and an email-synchronizing command in the general format, and then obtains the email status in the email server according to the parameter and the email-synchronizing command.

After receiving the parameter and the email-synchronizing command in the synchronous data format, the data synchronization module of the email synchronization server sends them to the command resolution/generation module of the email synchronization server, where they are resolved into the parameter and the email-synchronizing command in the general format. The resolved parameter and the email-synchronizing command are sent to the central processing module in the email management module of the email synchronization server. The central processing module reads the parameter set by the user through a user interface or pre-stored in the email parameter setting module of the email synchronization server; and sends the email-synchronizing command and the parameters of the email synchronization client and the central processing module to the email server interaction module of the email synchronization server. By using the email-synchronizing command and the parameters of the email synchronization client and of the email server interaction module, the email server interaction module interacts with the email server through an interface with the email server to obtain the email status.

Step 802: The email synchronization server converts the acquired email status into the synchronous data format, and sends the email status in the synchronous data format to the email synchronization client.

After being received at the email server interaction module of the email synchronization server, the acquired email status is sent to the central processing module of the email synchronization server. The central processing module sends the email status to the command resolution/generation module of the email synchronization server. The command resolution/generation module converts the email status into the synchronous data format, and sends it to the data synchronization module of the email synchronization server. The data synchronization module sends the email status in the synchronous data format to the data synchronization module of the email synchronization client.

Step 803: The email synchronization client converts the received email status in the synchronous data format into an email status in the general format, updates the email status in the email synchronization client, and displays the email status to the user.

The data synchronization module of the email synchronization client sends the email status in the synchronous data format to the command resource/generation module of the email synchronization client. The command resolution/generation module converts the email status in the synchronous data format into an email status in the general format, and sends the email status to the central processing module of the email synchronization client. The central processing module updates the status of the email stored in the email storage module of the email synchronization client according to the status of such a received email, and displays the email status to the user through a user interface of the email synchronization client.

According to the embodiments of the present invention, synchronization of email status lies in the following situations: (1) In the case of unidirectional synchronization from the email synchronization server to the email synchronization client, the email synchronization server sends the email status in its own database to the email synchronization client, and the email synchronization client refreshes the email status in the its own database according to the email status received from the email synchronization server; (2) in the case of unidirectional synchronization from the email synchronization client to the email synchronization server, the email synchronization client sends the email status in its own database to the email synchronization server, and the email synchronization server refreshes the email status in its own database according to the email status received from the email synchronization client; (3) in the case of bidirectional synchronization between the email synchronization client and the email synchronization server, the email synchronization client and the email synchronization server send the email status in their respective databases reciprocally, and update the email status in their databases respectively.

According to the embodiments of the present invention, the email synchronization can generate different effects, depending on the synchronization process between the email synchronization client and the email synchronization server. The synchronization process refers to unidirectional synchronization, bidirectional synchronization, fast synchronization, slow synchronization, and etc.

Figure 9 is a flowchart of a method for forwarding downloaded emails through data synchronization according an embodiment of the present invention, including the steps hereinafter.

Step 900: The email synchronization client establishes a synchronous session with the email synchronization client. The email synchronization client selects or downloads an email to be forwarded, determines whether to edit the email, and synchronizes the email to be forwarded in the synchronous data, the email-forwarding command, and the parameters to the email synchronization server.

After receiving an instruction from the central processing module through a user interface of the email synchronization client, the user selects or edits the email. Meanwhile, the central processing module reads the parameters from the email parameter setting module of the email synchronization client, and then sends the email to be forwarded, the email-forwarding command and the parameter to the command resolution/generation module of the email synchronization client. The command resolution/generation module converts the email to be forward, the email-forwarding command and the parameter into the synchronous data format, and sends them to the data synchronization module of the email synchronization client. Through a data synchronization protocol, the data synchronization module sends the email to be forwarded, the email-forwarding command and the parameter in the synchronous data format to the data synchronization module of the email synchronization server.

This parameter is an indication message of the email-forwarding command.

Step 901: After converting the email to be forwarded, the email-forwarding command and the parameter in the synchronous data format into the email to be forwarded and the email-forwarding command in the general format, the email synchronization server interacts with the email server through an interface connected to the email server according to the email-forwarding command and the parameter, and forwards the email through the email server.

After receiving the email to be forwarded, the parameter and the email-forwarding command in the synchronous data format, the data synchronization module of the email synchronization server sends them to the command resolution/generation module of the email synchronization server, where they are resolved into the email to be forwarded, the parameter and the email-forwarding command in the general format. The resolved email to be forwarded, the parameter and the email-forwarding command are sent to the central processing module of the email synchronization server. The central processing module reads the parameters in the email parameter setting module of the email management module of the email synchronization server; and sends the email to be forwarded, the email-forwarding command and the parameters of the email synchronization client and of the central processing module to the email server interaction module of the email synchronization server. By using the email to be forwarded, the email-forwarding command and the parameters of the email synchronization client and of the email server interaction module, the email server interaction module interacts with the email server through an interface connected with the email server, and the email server forwards the email through the SMTP command.

In the method shown in Figure 9, the email forwarded by the email synchronization client is an email selected by the user from the stored emails, or a new email generated after the user edits the selected email.

According to the embodiments of the present invention, both the email synchronization client and the email synchronization server reserve the serial number of the stored emails. Therefore, in the process as shown in Figure 9, the email synchronization client sends a command that carries the serial number of the email to be forwarded to the email synchronization server. After receiving the command, the email synchronization server interacts with the email server directly through an interface connected with the email server according to the serial number of the email, and the email server sends the email out.

According to the embodiments of the present invention, the email synchronization client allocates a Local Unique Identity (LUID) to each email, as shown in the following table:

**Table 1**

| LUID | Name |
|---|---|
| 0001 | Email 1 |
| 0002 | Email 2 |
| 0003 | Email 3 |

Accordingly, on the email synchronization server, each email has a corresponding serial number. The email synchronization server needs to ensure uniqueness of the serial number of each email. Therefore, the serial number allocated to an email is a long numeral or code. As the email synchronization client may be unable to support such a long email number, According to the embodiments of the present invention, the email synchronization server allocates a Global Unique Identity (GUID) to each email as an email code, and saves the mapping between the GUID and the LUID of the same email, as shown in Table 2 and Table 3:

**Table 2**

| GUID | Name |
|---|---|
| 000100001 | Email 1 |
| 000100002 | Email 2 |
| 000100003 | Email 3 |

Mapping between the GUID and the LUID:

**Table 3**

| LUID | GUID |
|---|---|
| 0001 | 000100001 |
| 0002 | 000100002 |
| 0003 | 000100003 |

The LUIDs set by different email synchronization clients for different emails may be identical. Therefore, during mapping between the GUID and the LUID on the email synchronization server, it is necessary to identify the identity of the email synchronization client, and therefore the LUID of an email can be sent to a definite email synchronization client. In this case, interaction of numbers of emails between the email synchronization client and the email synchronization server can be performed through the LUID of the email.

According to the embodiments of the present invention, through the data synchronization technology, the user can forward an email without downloading the email, or forward an email after downloading only part of the email. That is, the user forwards only part of the email data. The information on the forwarding mode is configured in the email parameter setting module of the email synchronization client. At the initialization stage when a synchronization session is performed between the email synchronization client and the email synchronization server, the email forwarding mode is negotiated; or the forwarding mode is determined for a specific email and configured in the email parameter setting module of the email synchronization client. In this way, the information on the forwarding mode can be obtained when sending a specific email, and the email is forwarded in the obtained forwarding mode.

According to the embodiments of the present invention, for an interaction process, the parameters obtained from the email synchronization client may conflict with the parameters obtained from the email synchronization server. In this case, a mechanism can be preset so that the parameters obtained from the email synchronization client or the parameters obtained from the email synchronization server shall prevail when any conflict occurs.

According to the embodiments of the present invention, it is unnecessary to set parameters in the email parameter setting module of the email synchronization client and the email synchronization server. Instead, the commands can be used to transmit the emails, email notifications and email status directly.

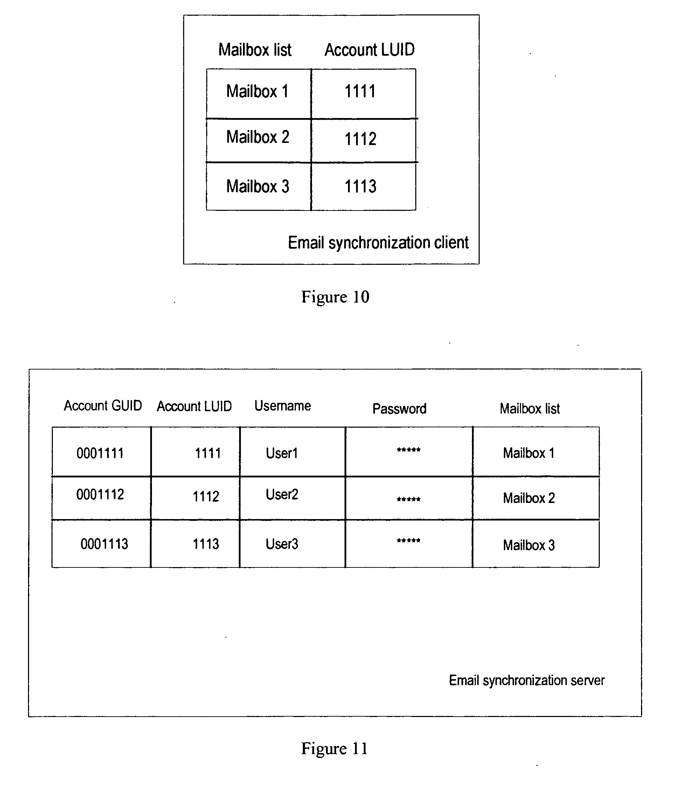

In order to accomplish email interaction through the data synchronization technology, the user can register an account on the email synchronization client and the email synchronization server respectively, and receive or send email data, commands and/or parameters according to the registered account. According to the embodiments of the present invention, an account can be registered in two ways. The user may also register an account on the email synchronization client, and then synchronizes the registered account to the account registration/authentication module of the email synchronization server, as shown in Figure 10 and Figure 11. Figure 10 shows accounts registered by the user on the email synchronization client. Figure 11 shows accounts registered by the user on the email synchronization server.

In Figure 10, the account list is stored in the email storage module of the email synchronization client, and each account is identified by an LUID and corresponding to one or more email servers. In Figure 11, the account list is stored in the account authentication/registration module of the email synchronization server, and each account is identified by a GUID and corresponding to an LUID, a username, a password and one or more email servers. Apparently, one or more accounts set by one user on the email synchronization client or the email synchronization server should be consistent.

In the method as shown in Figure 10 and Figure 11, the email synchronization client maintains one LUID for each account. The email synchronization client registers the account to the email synchronization server through an account registration process. The email synchronization server maintains the user's account information, including the mapping between LUID and GUID of an account, a username, a password, and an email server list of each account.

When operating email, the user can select a registered account on the email synchronization client, and sends a serial number of the account, for example, LUID, to the email synchronization server through the synchronization process. The email synchronization server authenticates the account corresponding to the serial number according to the stored account information. If the authentication succeeds, the email synchronization server and the email synchronization client use the account to perform email data interaction.

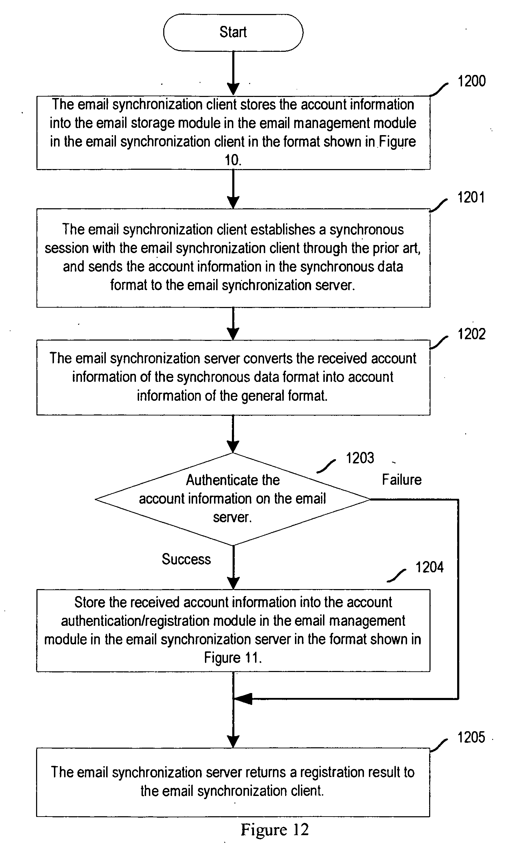

Figure 12 is a flowchart of a method for registering an account through data synchronization according an embodiment of the present invention, including the following steps:

Step 1200: The email synchronization client stores the account information into the email storage module of the email synchronization client in the format as shown in Figure 10.

The user completes the account information through the user interface of the email synchronization client. After the email storage module of the email synchronization client receives an instruction of storing account information from the central processing module, the account information is sent to the command resolution/generation module in the synchronization client.

Step 1201: The email synchronization client establishes a synchronous session with the email synchronization server, and sends the account information in the synchronous data format to the email synchronization server.

The command resolution/generation module of the email synchronization client converts the account information to the synchronous data format, and sends it to the data synchronization module of the email synchronization client. The data synchronization module sends the account information in the synchronous data format to the data synchronization module of the email synchronization server.

Step 1202: The email synchronization server converts the received account information in the synchronous data format into account information in the general format.

The data synchronization module of the email synchronization server sends the account information in the synchronous data format to the command resolution/generation module of the email synchronization server, where the account information in the synchronous data format is converted to the account information in the general format, and sent to the email server interaction module in the email management module of the email synchronization server through the central processing module of the email synchronization server.

Step 1203: The email synchronization server authenticates the account information sent by the email synchronization client on the email server. If the authentication succeeds, proceed to step 1204; otherwise, proceed to step 1205.

The email server interaction module of the email synchronization server authenticates the account information on the email server.

Step 1204: The email synchronization server stores the received account information into the account authentication/registration module of the email synchronization server in the format as shown in Figure 11.

Under the control of the central processing module of the email synchronization server, the account information is sent to the account authentication/registration module of the email synchronization server, and stored in the format as shown in Figure 11.

Step 1205: The email synchronization server returns registration information carrying an indication of confirmation or non-confirmation to the email synchronization client.

The central processing module of the email synchronization server returns an indication of confirmation or non-confirmation. The central processing module sends the indication of confirmation or non-confirmation to the data synchronization module of the email synchronization server through the command resolution/generation module of the email synchronization server, and then the data synchronization module sends the indication of confirmation or non-confirmation to the data synchronization module of the email synchronization client through the established synchronous session. The data synchronization module receives the instruction from the central processing module through the command resolution/generation module of the email synchronization client, and sends back the indication of confirmation or non-confirmation to the user through the user interface of the email synchronization client.

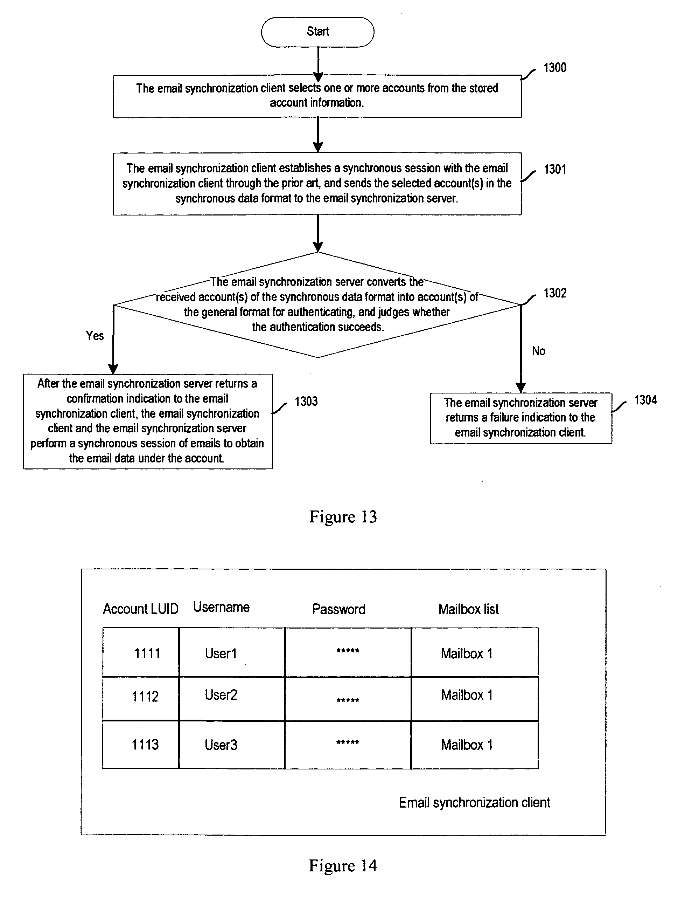

Figure 13 is a flowchart of a method for logging in to an account through data synchronization according an embodiment of the present invention, including the following steps:

Step 1300: The email synchronization client selects one or more accounts from the stored account information.

The user selects one or more stored accounts through the user interface of the email synchronization client, and sends the account to the central processing module of the email synchronization client. The central processing module sends the selected account to the command resolution/generation module of the email synchronization client.

Step 1301: The email synchronization client establishes a synchronous session with the email synchronization client, and sends the selected account in the synchronous data format to the email synchronization server.

The command resolution/generation module of the email synchronization client converts the selected account to the synchronous data format, and sends it to the data synchronization module of the email synchronization client. The data synchronization module sends the selected account in the synchronous data format to the data synchronization module of the email synchronization server.

Step 1302: the email synchronization server converts the received account in the synchronous data format into the account in the general format, and authenticates the converted account according to the account information stored in the email synchronization server. If the authentication succeeds, proceed to step 1303; otherwise, proceed to step 1304.

The data synchronization module of the email synchronization server sends the received account in the synchronous data format to the command resolution/generation module of the email synchronization server, where the converted account are sent to central processing module of the email synchronization server. The central processing module forwards the converted account to the account authentication/registration module of the email synchronization server for authenticating the account according to the stored account information.

Step 1303: After the email synchronization server returns a confirmation indication to the email synchronization client, the email synchronization client and the email synchronization server perform a synchronous session of emails to obtain the email data under the account.

The account authentication/registration module of the email synchronization server determines that the authentication succeeds, and sends a confirmation indication to the central processing module of the email synchronization server. The confirmation indication is sent to the data synchronization module of the email synchronization server through the command resolution/generation module of the email synchronization server. The data synchronization module sends the confirmation indication to the data synchronization module of the email synchronization client.

Step 1304: The email synchronization server returns a failure indication to the email synchronization client.

The account authentication/registration module of the email synchronization server determines that the authentication fails, and sends a failure indication to the central processing module of the email synchronization server. The failure indication is sent to the data synchronization module of the email synchronization server through the command resolution/generation module of the email synchronization server. The data synchronization module sends the failure indication to the data synchronization module of the email synchronization client. This data synchronization module receives an instruction from the central processing module through the command resolution/generation module of the email synchronization client, and sends back the failure indication to the user through the user interface of the email synchronization client.

According to the embodiments of the present invention, account information may be maintain only in the email synchronization client, as shown in Figure 14. In this method, account information is maintained only in the email synchronization client. When the user operates an account, the email synchronization client sends all information about the account to the email synchronization server through a synchronous session process. The email synchronization server authenticates the account through interaction between the email server interaction module and the email server (account information is pre-stored in the email server). If the authentication succeeds, proceed to step 1303, as shown in Figure 13; if the authentication fails, proceed to step 1304, as shown in Figure 13.

According to the embodiments of the present invention, when the email synchronization client interacts with the email synchronization server, the emails, email notifications, email status, commands and/or parameters are all converted into the synchronous data format, and interaction is performed through the data synchronization protocol.

Elaborated above are the objective, technical solution and benefits of the present invention with reference to specific embodiments. It should be understood that, although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. An email synchronization server (200), comprising:
a data synchronization module (230), a command resolution/generation module (220), an email management module (210), wherein the command resolution/generation module connects the email management module (210) to the data synchronization module (230),
the data synchronization module (230), adapted to transmit email data in a synchronous data format with an email synchronization client (100), and exchange email data with the command resolution/generation module (220);
the command resolution/generation module (220), adapted to resolve email data in the synchronous data format sent from the data synchronization module (230) into a non-synchronous data format and send the resolved email data in the non-synchronous data format to the email management module (210) ; and/or, adapted to convert email data in the non-synchronous data format sent from the email management module (210) into the synchronous data format and send the converted email data in the synchronous data format to the data synchronization module (230);
the email management module (210) , adapted to exchange email data in the non-synchronous data format with the command resolution/generation module (220), and to exchange the email data in the non-synchronous data format with an email server (300).

2. The email synchronization server of claim 1, wherein the email data includes one or any combination of an email, a part of email, commands about an email, and parameters about an email.

3. The email synchronization server of claim 1, wherein the email management module comprises:
a user interface , adapted (211) to interact with the email synchronization server by a user under the instruction of a central processing module;
an email server interaction module (212), adapted to interact with the email server under the instruction of the central processing module;
a central processing module (215), adapted to coordinate the work of the email server interaction module (212)and the user interface(21 1), and interact with the command resolution/generation module(220).

4. The email synchronization server of claim 2, wherein the email management module further comprises:
an email parameter setting module (213), and an account authentication/registration module (214), which interact with the central processing module (215) respectively;
the email parameter setting module (213) is adapted to set email parameters under the control of the central processing module (215) according to the email parameters sent by the user through the user interface(211);
the account authentication/registration module (214) is adapted to save the user's account information under the control of the central processing module (215), and implement account authentication and authorization

5. The email synchronization server of claim 1, wherein the data synchronization module (230) comprises:
a security module (232), adapted to ensure secure transmission of email or email status between the email synchronization client(100) and the email synchronization server(200);
a device capability interaction module (231), adapted to interact device capabilities between the email synchronization server(200) and the email synchronization client (100); and
a transmission module (233), adapted to transmit emails or email status between the email synchronization server(200) and the email synchronization client(100).

6. The email synchronization server of claim 4, wherein the data synchronization module (230) further comprises:
an event notification module (234), adapted to send email notifications to the email synchronization client (100).

7. The email synchronization server of claim 1, wherein the email server (300) is integrated into the email synchronization server (200) to interact with the email management module.

8. A method for processing an email, comprising:
transmitting, by an email synchronization server (200), email data in a synchronous data format with an email synchronization client (100);
exchanging, by the email synchronization server (200), the email data in a non-synchronous data format with an email server (300);
and at least one of the following two steps: ① converting, by the email synchronization server (200), the email data in the non-synchronous data format received from the email server (300) into the email data in the synchronous data format, and ② resolving, by the email synchronization server (200), the email data in the synchronous data format received from the email synchronization client (100) into the email data in the non-synchronous data format.

9. The method of claim 8, wherein the email data includes one or any combination of an email, a part of email, commands about an email, and parameters about an email.

10. The method of claim 9, wherein
the process of transmitting, email data in a synchronous data format with an email synchronization client (100) comprises:
receiving an email and an email-sending command in the synchronous data format synchronized by the email synchronization client; and,
the process of resolving, by the email synchronization server (200), email data, in the synchronous data format into the non-synchronous data format comprises:
converting the received email in the synchronous data format into the email of the interface message format, converting the email-sending command to an interface message, and
the process of exchanging, by the email synchronization server (200), email data in the non-synchronous data format with an email server (300) comprises:
sending the email of the interface message format and the interface message to the email server which sends the email out through the SMTP according to the interface message.

11. The method of claim 8, wherein the process of transmitting, by the email synchronization server (200), email data in a synchronous data format with an email synchronization client (100) comprises:
receiving an email-receiving command in the synchronous data format from the email synchronization client,
the process of exchanging, by the email synchronization server (200), email data in the non-synchronous data format with an email server (300) comprises:
receiving an email or part of an email from the email server according to the resolved email-receiving command; and,
the process of converting, by the email synchronization server (200), email data in a non-synchronous data format into the synchronous data format comprises:
converting the acquired email or the part of the email into the synchronous data format,
the process of transmitting, by the email synchronization server (200), email data in a synchronous data format with an email synchronization client (100) further comprises:
sending the email or the part of the email in the synchronous data format to the email synchronization client.

12. The method of claim 8, wherein the process of transmitting, by the email synchronization server (200), email data in a synchronous data format with an email synchronization client (100) comprises:
sending an email notification in the synchronous data format to the email synchronization client, or sending an email notification which carries the email event information received from the email server to the email synchronization client through an engine.

13. The method of claim 8, wherein the process of transmitting, by the email synchronization server (200), email data in a synchronous data format with an email synchronization client (100) comprises:
receiving an email-synchronizing command in the synchronous data format from the email synchronization client,
the process of exchanging, by the email synchronization server (200), email data in the non-synchronous data format with an email server (300) comprises:
receiving email status in the non-synchronous data format from the email server according to the email-synchronizing command;
the process of converting, by the email synchronization server (200), email data in a non-synchronous data format into the synchronous data format comprises:
converting the received email status in the non-synchronous data format into the synchronous data format,
the process of transmitting, by the email synchronization server (200), email data in a synchronous data format with an email synchronization client (100) further comprises:
sending the email status in the synchronous data format to the email synchronization client.

14. The method of claim 8, wherein the email data is a serial number of the email, the email synchronization server sets a mapping relation between the Local Unique Identity (LUID) and the Global Unique Identity (GUID) of an email;
wherein the method further comprises:
receiving the LUID of the email sent by the email synchronization client;
determining the GUID corresponding to the received LUID according to the mapping relation, determining the corresponding email according to the GUID, and sending the corresponding email out or updating.

15. The method of claim 8, wherein the email synchronization server (200) sets a mapping relation between the Local Unique Identity (LUID) and the Global Unique Identity (GUID) of an email;
the exchanging, by the email synchronization server (200), email data in the non-synchronous data format with an email server (300) comprises:
receiving the email from the email server;
the method further comprises:
determining the GUID corresponding to the received email;
determining the LUID corresponding to the GUID according to the set mapping relation; and
sending the LUID to the email synchronization client (100) so that the email synchronization client (100) can update the email corresponding to the LUID or obtain the email corresponding to the LUID from the email synchronization server.

## Patentansprüche

1. E-Mail-Synchronisations-Server (200), der Folgendes umfasst:
ein Datensynchronisationsmodul (230), ein Befehlsauflösungs-/ Befehlserzeugungsmodul (220) und ein E-Mail-Managementmodul (210), wobei das Befehlsauflösungs-Befehlserzeugungsmodul das E-Mail-Managementmodul (210) mit dem Datensynchronisationsmodul (230) verbindet,
wobei das Datensynchronisationsmodul (230) dafür ausgelegt ist, E-Mail-Daten in einem synchronen Datenformat mit einem E-Mail-Synchronisations-Client (100) zu senden und E-Mail-Daten mit dem Befehlsauflösungs-/Befehlserzeugungsmodul (220) auszutauschen;
das Befehlsauflösungs-Befehlserzeugungsmodul (220) dafür ausgelegt ist, E-Mail-Daten in dem synchronen Datenformat, das von dem Datensynchronisationsmodul (230) gesendet wird, in ein nicht synchrones Datenformat aufzulösen und die aufgelösten E-Mail-Daten in dem nicht synchronen Datenformat zu dem E-Mail-Managementmodul (210) zu senden; und/oder dafür ausgelegt ist, E-Mail-Daten in dem nicht synchronen Datenformat, die von dem E-Mail-Managementmodul (210) gesendet werden, in das synchrone Datenformat umzusetzen und die umgesetzten E-Mail-Daten in dem synchronen Datenformat zu dem Datensynchronisationsmodul (230) zu senden;
das E-Mail-Managementmodul (210) dafür ausgelegt ist, E-Mail-Daten in dem nicht synchronen Datenformat mit dem Befehlsauflösungs-/Befehlserzeugungsmodul (220) auszutauschen und die E-Mail-Daten in dem nicht synchronen Datenformat mit einem E-Mail-Server (300) auszutauschen.

2. E-Mail-Synchronisations-Server nach Anspruch 1, wobei die E-Mail-Daten eine oder irgendeine Kombination aus einer E-Mail, einem Teil einer E-Mail, Befehlen über eine E-Mail und Parametern über eine E-Mail enthalten.

3. E-Mail-Synchronisations-Server nach Anspruch 1, wobei das E-Mail-Managementmodul Folgendes umfasst:
eine Anwenderschnittstelle, die dafür ausgelegt ist (211), mit dem E-Mail-Synchronisations-Server durch einen Anwender unter dem Befehl eines zentralen Verarbeitungsmoduls in Wechselwirkung zu treten;
ein E-Mail-Server-Wechselwirkungsmodul (212), das dafür ausgelegt ist, mit dem E-Mail-Server unter dem Befehl des zentralen Verarbeitungsmoduls in Wechselwirkung zu treten;
ein zentrales Verarbeitungsmodul (215), das dafür ausgelegt ist, die Arbeit des E-Mail-Server-Wechselwirkungsmoduls (212) und der Anwenderschnittstelle (211) zu koordinieren und mit dem Befehlsauflösungs-/Befehlserzeugungsmodul (220) in Wechselwirkung zu treten.

4. E-Mail-Synchronisations-Server nach Anspruch 2, wobei das E-Mail-Managementmodul ferner Folgendes umfasst:
ein E-Mail-Parametereinstellmodul (213) und ein Kontoauthentifizierungs-/ Kontoregistrierungsmodul (214), die jeweils mit dem zentralen Verarbeitungsmodul (215) in Wechselwirkung stehen;
wobei das E-Mail-Parametereinstellmodul (213) dafür ausgelegt ist, E-Mail-Parameter unter der Steuerung des zentralen Verarbeitungsmoduls (215) in Übereinstimmung mit den E-Mail-Parametern, die von dem Anwender über die Anwenderschnittstelle (211) gesendet werden, einzustellen;
das Kontoauthentifizierungs-/Kontoregistrierungsmodul (214) dafür ausgelegt ist, die Kontoinformationen des Anwenders unter der Steuerung des zentralen Verarbeitungsmoduls (215) zu sichern und eine Kontoauthentifizierung und Kontoautorisierung zu implementieren.

5. E-Mail-Synchronisations-Server nach Anspruch 1, wobei das Datensynchronisationsmodul (230) Folgendes umfasst:
ein Sicherheitsmodul (232), das dafür ausgelegt ist, eine sichere Übertragung von E-Mail oder eines E-Mail-Status zwischen dem E-Mail-Synchronisations-Client (100) und dem E-Mail-Synchronisations-Server (200) zu gewährleisten;
ein Vorrichtungsfähigkeits-Wechselwirkungsmodul (231), das dafür ausgelegt ist, mit Vorrichtungsfähigkeiten zwischen dem E-Mail-Synchronisations-Server (200) und dem E-Mail-Synchronisations-Client (100) in Wechselwirkung zu stehen; und
ein Übertragungsmodul (233), das dafür ausgelegt ist, E-Mails oder einen E-Mail-Status zwischen dem E-Mail-Synchronisations-Server (200) und dem E-Mail-Synchronisations-Client (100) zu übertragen.

6. E-Mail-Synchronsations-Server nach Anspruch 4, wobei das
Datensynchronisationsmodul (230) ferner Folgendes umfasst:
ein Ereignismeldemodul (234), das dafür ausgelegt ist, E-Mail-Meldungen zu dem E-Mail-Synchronisations-Client (100) zu senden.

7. E-Mail-Synchronisations-Server nach Anspruch 1, wobei der E-Mail-Server (300) in den E-Mail-Synchronisations-Server (200) integriert ist, um mit dem E-Mail-Managementmodul in Wechselwirkung zu stehen.

8. Verfahren zur Verarbeitung einer E-Mail, das Folgendes umfasst:
Senden durch einen E-Mail-Synchronisations-Server (200) von E-Mail-Daten in einem synchronen Datenformat mit einem E-Mail-Synchronisations-Client (100);
Austauschen durch den E-Mail-Synchronisations-Server (200) der E-Mail-Daten in einem nicht synchronen Datenformat mit einem E-Mail-Server (300);
und wenigstens einen der folgenden Schritte: (1) Umsetzen durch den E-Mail-Synchronisations-Server (200) der E-Mail-Daten in dem nicht synchronen Datenformat, die von dem E-Mail-Server (300) empfangen werden, in die E-Mail-Daten in dem synchronen Datenformat und (2) Auflösen durch den E-Mail-Synchronisations-Server (200) der E-Mail-Daten in dem synchronen Datenformat, die von dem E-Mail-Synchronisations-Client (100) empfangen werden, in die E-Mail-Daten in dem nicht synchronen Datenformat.

9. Verfahren nach Anspruch 8, wobei die E-Mail-Daten eine oder irgendeine Kombination aus einer E-Mail, einem Teil einer E-Mail, Befehlen über eine E-Mail und Parametern über eine E-Mail enthalten.

10. Verfahren nach Anspruch 9, wobei
der Prozess des Sendens von E-Mail-Daten in einem synchronen Datenformat mit einem E-Mail-Synchronisations-Client (100) Folgendes umfasst:
Empfangen einer E-Mail und eines E-Mail-Sendebefehls in dem synchronen Datenformat, das durch den E-Mail-Synchronisations-Client synchronisiert ist; und
der Prozess des Auflösens durch den E-Mail-Synchronisations-Server (200) von E-Mail-Daten in dem synchronen Datenformat in das nicht synchrone Datenformat Folgendes umfasst:
Umsetzen der empfangenen E-Mail in dem synchronen Datenformat in die E-Mail des Schnittstellennachrichtenformats und Umsetzen des E-Mail-Sendebefehls in eine Schnittstellennachricht und
wobei der Prozess des Austauschens durch den E-Mail-Synchronisations-Server (200) von E-Mail-Daten in dem nicht synchronen Datenformat mit einem E-Mail-Server (300) Folgendes umfasst:
Senden der E-Mail des Schnittstellennachrichtenformats und der Schnittstellennachricht zu dem E-Mail-Server, der die E-Mail durch das SMTP in Übereinstimmung mit der Schnittstellennachricht aussendet.

11. Verfahren nach Anspruch 8, wobei der Prozess des Sendens durch den E-Mail-Synchronisations-Server (200) von E-Mail-Daten in einem synchronen Datenformat mit einem E-Mail-Synchronisations-Client (100) Folgendes umfasst:
Empfangen eines E-Mail-Empfangsbefehls in dem synchronen Datenformat von dem E-Mail-Synchronisations-Client,
wobei der Prozess des Austauschens durch den E-Mail-Synchronisations-Server (200) von E-Mail-Daten in dem nicht synchronen Datenformat mit einem E-Mail-Server (300) Folgendes umfasst:
Empfangen einer E-Mail oder eines Teils einer E-Mail von dem E-Mail-Server in Übereinstimmung mit dem aufgelösten E-Mail-Empfangsbefehl; und
wobei der Prozess des Umsetzens durch den E-Mail-Synchronisations-Server (200) von E-Mail-Daten in einem nicht synchronen Datenformat in das synchrone Datenformat Folgendes umfasst:
Umsetzen der erfassten E-Mail oder des Teils der E-Mail in das synchrone Datenformat, wobei der Prozess des Sendens durch den E-Mail-Synchronisations-Server (200) von E-Mail-Daten in einem synchronen Datenformat mit einem E-Mail-Synchronisations-Client (100) ferner Folgendes umfasst:
Senden der E-Mail oder des Teils der E-Mail in dem synchronen Datenformat zu dem E-Mail-Synchronisations-Client.

12. Verfahren nach Anspruch 8, wobei der Prozess des Sendens durch den E-Mail-Synchronisations-Server (200) von E-Mail-Daten in einem synchronen Datenformat mit einem E-Mail-Synchronisations-Client (100) Folgendes umfasst:
Senden einer E-Mail-Meldung in dem synchronen Datenformat zu dem E-Mail-Synchronisations-Client oder Senden einer E-Mail-Meldung, die die E-Mail-Ereignisinformationen, die von den E-Mail-Server empfangen werden, führt, zu dem E-Mail-Synchronisations-Client durch eine Maschine.

13. Verfahren nach Anspruch 8, wobei der Prozess des Sendens durch den E-Mail-Synchronisations-Server (200) von E-Mail-Daten in einem synchronen Datenformat mit einem E-Mail-Synchronisations-Client (100) Folgendes umfasst:
Empfangen eines E-Mail-Synchronisationsbefehls in dem synchronen Datenformat von dem E-Mail-Synchronisations-Client,
wobei der Prozess des Austauschens durch den E-Mail-Synchronisations-Server (200) von E-Mail-Daten in dem nicht synchronen Datenformat mit einem E-Mail-Server (300) Folgendes umfasst:
Empfangen eines E-Mail-Status in dem nicht synchronen Datenformat von dem E-Mail-Server in Übereinstimmung mit dem E-Mail-Synchronisationsbefehl;
wobei der Prozess des Umsetzens durch den E-Mail-Synchronisations-Server (200) von E-Mail-Daten in einem nicht synchronen Datenformat in das synchrone Datenformat Folgendes umfasst:
Umsetzen des empfangenen E-Mail-Status in dem nicht synchronen Datenformat in das synchrone Datenformat,
wobei der Prozess des Sendens durch den E-Mail-Synchronisations-Server (200) von E-Mail-Daten in einem synchronen Datenformat mit einem E-Mail-Synchronisations-Client (100) ferner Folgendes umfasst:
Senden des E-Mail-Status in dem synchronen Datenformat zu dem E-Mail-Synchronisations-Client.

14. Verfahren nach Anspruch 8, wobei die E-Mail-Daten eine laufende Nummer der E-Mail sind, der E-Mail-Synchronisations-Server eine Abbildungsbeziehung zwischen der lokalen eindeutigen Kennung (LUID) und der globalen eindeutigen Kennung (GUID) einer E-Mail festlegt;
wobei das Verfahren ferner Folgendes umfasst:
Empfangen der LUID der E-Mail, die durch den E-Mail-Synchronisations-Client gesendet wird;
Bestimmen der GUID, die der empfangenen LUID entspricht, in Übereinstimmung mit der Abbildungsbeziehung, Bestimmen der entsprechenden E-Mail in Übereinstimmung mit der GUID und Aussenden oder Aktualisieren der entsprechenden E-Mail.

15. Verfahren nach Anspruch 8, wobei der E-Mail-Synchronisations-Server (200) eine Abbildungsbeziehung zwischen der lokalen eindeutigen Kennung (LUID) und der globalen eindeutigen Kennung (GUID) einer E-Mail festlegt;
wobei das Austauschen durch den E-Mail-Synchronisations-Server (200) von E-Mail-Daten in dem nicht synchronen Datenformat mit einem E-Mail-Server (300) Folgendes umfasst:
Empfangen der E-Mail von dem E-Mail-Server;
wobei das Verfahren ferner Folgendes umfasst:
Bestimmen der GUID, die der empfangenen E-Mail entspricht;
Bestimmen der LUID, die der GUID entspricht, in Übereinstimmung mit der festgelegten Abbildungsbeziehung; und
Senden der LUID zu dem E-Mail-Synchronisations-Client (100), so dass der E-Mail-Synchronisations-Client (100) die E-Mail, die der LUID entspricht, aktualisieren kann oder die E-Mail, die der LUID entspricht, von dem E-Mail-Synchronisations-Server erhalten kann.

## Revendications

1. Serveur de synchronisation de messages électroniques (200), comprenant :
un module de synchronisation de données (230), un module de résolution et de génération d'ordres (220), un module de gestion de messages électroniques (210), dans lequel le module de résolution et de génération d'ordres relie le module de gestion de messages électroniques (210) au module de synchronisation de données (230),
le module de synchronisation de données (230) étant conçu pour transmettre des données de message électronique suivant un format des données synchrones avec un client de synchronisation de messages électroniques (100), et pour échanger des données de message électronique avec le module de résolution et de génération d'ordres (220),
le module de résolution et de génération d'ordres (220) étant conçu pour résoudre des données de message électronique dans le format de données synchrones envoyées depuis le module de synchronisation de données (230) en un format de données non synchrones, et pour envoyer les données de message électronique résolues dans le format de données non synchrones au module de gestion de messages électroniques (210), et/ou étant conçu pour convertir des données de message électronique dans le format de données non synchrones envoyées depuis le module de gestion de messages électroniques (210) en format de données synchrones, et pour envoyer les données de message électronique converties dans le format de données synchrones vers le module de synchronisation de données (230),
le module de gestion de messages électroniques (210) étant conçu pour échanger des données de message électronique dans le format de données non synchrones avec le module de résolution et de génération d'ordres (220), et pour échanger les données de message électronique dans le format de données non synchrones avec un serveur de messages électroniques (300).

2. Serveur de synchronisation de messages électroniques selon la revendication 1, dans lequel les données de message électronique incluent une quelconque ou toute combinaison d'un message électronique, d'une partie de message électronique, d'ordres sur un message électronique et de paramètres sur un message électronique.

3. Serveur de synchronisation de messages électroniques selon la revendication 1, dans lequel le module de gestion de messages électroniques comprend :
une interface utilisateur (211), conçue pour interagir avec le serveur de synchronisation de messages électroniques grâce à un utilisateur selon l'instruction d'un module de traitement central,
un module d'interaction avec un serveur de messages électroniques (212), conçu pour interagir avec le serveur de messages électroniques selon l'instruction du module de traitement central,
un module de traitement central (215), conçu pour coordonner le travail du module d'interaction avec un serveur de messages électroniques (212) et l'interface utilisateur (211), et pour interagir avec le module de résolution et de génération d'ordres (220).

4. Serveur de synchronisation de messages électroniques selon la revendication 2, dans lequel le module de gestion de messages électroniques comprend en outre :
un module d'établissement de paramètres de messages électroniques (213) et un module d'authentification et d'enregistrement de compte (214) qui interagissent respectivement avec le module de traitement central (215),
le module d'établissement de paramètres de messages électroniques (213) est conçu pour établir des paramètres de messages électroniques sous le contrôle du module de traitement central (215) en fonction des paramètres des messages électroniques envoyés par l'utilisateur par l'intermédiaire de l'interface utilisateur (211),
le module d'authentification et d'enregistrement de compte (214) est conçu pour sauvegarder les informations du compte utilisateur sous le contrôle du module de traitement central (215), et pour mettre en oeuvre l'authentification et l'autorisation du compte.

5. Serveur de synchronisation de messages électroniques selon la revendication 1, dans lequel le module de synchronisation de données (230) comprend :
un module de sécurité (232) conçu pour garantir une transmission sûre d'un message électronique ou du statut d'un message électronique entre le client de synchronisation de messages électroniques (100) et le serveur de synchronisation de messages électroniques (200),
un module d'interaction avec des capacités de dispositifs (231) conçu pour faire interagir les capacités des dispositifs entre le serveur de synchronisation de messages électroniques (200) et le client de synchronisation de messages électroniques (100), et
un module de transmission (233) conçu pour transmettre des messages électroniques ou le statut de messages électroniques entre le serveur de synchronisation de messages électroniques (200) et le client de synchronisation de messages électroniques (100).

6. Serveur de synchronisation de messages électroniques selon la revendication 4, dans lequel le module de synchronisation de données (230) comprend en outre :
un module de notification d'événements (234) conçu pour envoyer des notifications de messages électroniques au client de synchronisation de messages électroniques (100).

7. Serveur de synchronisation de messages électroniques selon la revendication 1, dans lequel le serveur de messages électroniques (300) est intégré dans le serveur de synchronisation de messages électroniques (200) pour interagir avec le module de gestion de messages électroniques.

8. Procédé de traitement d'un message électronique, comprenant :
la transmission, par un serveur de synchronisation de messages électroniques (200) de données de message électronique dans un format de données synchrones avec un client de synchronisation de messages électroniques (100),
l'échange, grâce au serveur de synchronisation de messages électroniques (200), des données de message électronique dans un format de données non synchrones, avec le serveur de messages électroniques (300),
et au moins l'une des deux étapes qui suivent : ① la conversion, grâce au serveur de synchronisation de messages électroniques (200) des données de message électronique dans le format de données non synchrones reçues en provenance du serveur de messages électroniques (300) en données de message électronique dans le format de données synchrones, et ② la résolution, par le serveur de synchronisation de messages électroniques (200), des données de message électronique dans le format de données synchrones reçues en provenance du client de synchronisation de messages électroniques (100) en données de message électronique dans le format de données non synchrones.

9. Procédé selon la revendication 8, dans lequel les données de message électronique incluent une quelconque ou toute combinaison d'un message électronique, d'une partie de message électronique, d'ordres sur un message électronique et de paramètres sur un message électronique.

10. Procédé selon la revendication 9, dans lequel
le processus de transmission de données de message électronique dans un format de données synchrones avec un client de synchronisation de messages électroniques (100) comprend :
la réception d'un message électronique et d'un ordre d'envoi de message électronique dans le format de données synchrones qui est synchronisé par le client de synchronisation de messages électroniques, et
le processus de résolution, par le serveur de synchronisation de messages électroniques (200), de données de message électronique dans le format de données synchrones en format de données non synchrones comprend :
la conversion du message électronique reçu dans le format de données synchrones en un message électronique au format de message interface, la conversion de l'ordre d'envoi de message électronique en un message interface, et
le processus d'échanges, par le serveur de synchronisation de messages électroniques (200), de données de message électronique dans le format de données non synchrones avec un serveur de messages électroniques (300) comprend :
l'envoi du message électronique au format de message interface et du message interface au serveur de messages électroniques qui envoie le message électronique vers l'extérieur par l'intermédiaire du protocole SMTP en fonction du message interface.

11. Procédé selon la revendication 8, dans lequel le processus de transmission, grâce au serveur de synchronisation de messages électroniques (200), de données de message électronique dans un format de données synchrones avec un client de synchronisation de messages électroniques (100) comprend :
la réception d'un ordre de réception de message électronique dans le format de données synchrones à partir du client de synchronisation de messages électroniques, le processus d'échanges, par le serveur de synchronisation de messages électroniques (200), de données de message électronique dans le format de données non synchrones avec un serveur de messages électroniques (300) comprend :
la réception d'un message électronique ou d'une partie d'un message électronique provenant du serveur de messages électroniques en fonction de l'ordre résolu de réception de message électronique, et
le processus de conversion, par le serveur de synchronisation de messages électroniques (200), de données de message électronique dans un format de données non synchrones en format de données synchrones comprend :
la conversion du message électronique ou de la partie du message électronique acquis dans le format de données synchrones,
le processus de transmission, par le serveur de synchronisation de messages électroniques (200), des données de message électronique dans un format de données synchrones avec un client de synchronisation de messages électroniques (100) comprend en outre :
l'envoi du message électronique ou de la partie du message électronique dans le format de données synchrones vers le client de synchronisation de messages électroniques.

12. Procédé selon la revendication 8, dans lequel le processus de transmission, par le serveur de synchronisation de messages électroniques (200), de données de message électronique dans un format de données synchrones avec un client de synchronisation de messages électroniques (100) comprend :
l'envoi d'une notification de message électronique dans le format de données synchrones au client de synchronisation de messages électroniques, ou bien l'envoi vers le client de synchronisation de messages électroniques d'une notification de message électronique qui transporte les informations d'événements sur un message électronique reçues en provenance du serveur de messages électroniques par l'intermédiaire d'un moteur.

13. Procédé selon la revendication 8, dans lequel le processus de transmission, par le serveur de synchronisation de messages électroniques (200), de données de message électronique dans un format de données synchrones avec un client de synchronisation de messages électroniques (100) comprend :
la réception d'un ordre de synchronisation de message électronique dans le format de données synchrones à partir du client de synchronisation de messages électroniques, le processus d'échange, par le serveur de synchronisation de messages électroniques (200) de données de message électronique dans le format de données non synchrones avec un serveur de messages électroniques (300) comprend :
la réception d'un statut de message électronique dans le format de données non synchrones provenant du serveur de messages électroniques en fonction de l'ordre de synchronisation de message électronique,
le processus de conversion, par le serveur de synchronisation de messages électroniques (200), de données de message électronique dans un format de données non synchrones en format de données synchrones comprend :
la conversion du statut du message électronique reçu dans le format de données non synchrones en format de données synchrones,
le processus de transmission, par le serveur de synchronisation de messages électroniques (200), de données de message électronique dans un format de données synchrones avec un client de synchronisation de messages électroniques (100) comprend en outre :
l'envoi du statut du message électronique dans le format de données synchrones vers le client de synchronisation de messages électroniques.

14. Procédé selon la revendication 8, dans lequel les données de message électronique sont le numéro de série du message électronique, le serveur de synchronisation de messages électroniques établissant une relation de mappage entre l'identité unique locale (LUID) et l'identité unique globale (GUID) d'un message électronique,
dans lequel le procédé comprend en outre :
la réception de l'identité LUID du message électronique envoyé par le client de synchronisation de messages électroniques,
la détermination de l'identité GUID correspondant à l'identité LUID reçue en fonction de la relation de mappage, la détermination du message électronique correspondant en fonction de l'identité GUID et l'envoi du message électronique correspondant vers l'extérieur ou bien sa mise à jour.

15. Procédé selon la revendication 8, dans lequel le serveur de synchronisation de messages électroniques (200) établit une relation de mappage entre l'identité unique locale (LUID) et l'identité unique globale (GUID) d'un message électronique, l'échange, par le serveur de synchronisation de messages électroniques (200) de données de message électronique dans le format de données non synchrones avec un serveur de messages électroniques (300) comprend :
la réception du message électronique provenant du serveur de messages électroniques,
le procédé comprend en outre :
la détermination de l'identité GUID correspondant au message électronique reçu,
la détermination de l'identité LUID correspondant à l'identité GUID en fonction de la relation de mappage établie, et
l'envoi de l'identité LUID au client de synchronisation de messages électroniques (100) de telle sorte que le client de synchronisation de messages électroniques (100) puisse mettre à jour le message électronique correspondant à l'identité LUID ou récupérer le message électronique correspondant à l'identité LUID à partir du serveur de synchronisation de messages électroniques.
